# EUROPÄISCHE PATENTANMELDUNG

(11) **EP 3 819 832 A1**
(43) Veröffentlichungstag der Anmeldung: **12.05.2021**
(21) Anmeldenummer: 19207444.1
(22) Anmeldetag: 06.11.2019
(51) Int. Cl.: G06Q 10/04

(54) **VERFAHREN ZUM MANUELLEN KOMMISSIONIEREN VON ZUMINDEST ZWEI PRODUKTEN**

(71) Anmelder: SPAR Österreichische Warenhandels-AG, 5015 Salzburg (AT)
(72) Erfinder: Gleiss, Martin, 5310 Mondsee (AT)
(74) Vertreter: Margotti, Herwig Franz

(57) **Zusammenfassung**

Die Erfindung betrifft ein Verfahren zum manuellen Kommissionieren von zumindest zwei Produkten (6), umfassend die Schritte:
- Hinterlegen von Schlichtungsparametern (S) zugehörig zu Produktkennzeichnungen (Pn) der zumindest zwei Produkte (6) in einer Datenbank (8);
- Empfangen eines Auftrags (5), welcher Produktkennzeichnungen (Pn) von zumindest zwei bestellten Produkten (6) umfasst;
- Bereitstellen eines Transporthilfsmittels (3) zur Aufnahme der bestellten Produkte (6);
- Abrufen der Schlichtungsparameter (S) der bestellten Produkte (6) aus der Datenbank (8);
- Berechnen einer Packordnung anhand der abgerufenen Schlichtungsparameter (S);
- Erzeugen einer Ansicht der berechneten Packordnung und Anzeigen der Ansicht als Packbild (10); und
- manuelles Verbringen der Produkte (6) in die auf dem Packbild (10) angezeigte Packordnung auf das Transporthilfsmittel (3).

## Beschreibung

Die Erfindung betrifft ein Verfahren zum manuellen Kommissionieren von zumindest zwei Produkten. In einem weiteren Aspekt betrifft die Erfindung einen Kommissionierarbeitsplatz zum manuellen Kommissionieren von zumindest zwei Produkten.

Aus dem Stand der Technik ist das manuelle Kommissionieren von Produkten bekannt, indem einer Fachkraft, auch Kommissionierperson genannt, ein Auftrag mit einer Produktliste überreicht wird. Die Kommissionierperson sucht und holt die bestellten Produkte daraufhin aus einem Lager und schlichtet diese auf ein Transporthilfsmittel wie eine Palette. Bei dieser Aufgabe liegt eine wesentliche Herausforderung in der richtigen Schlichtung der Waren auf den Transporthilfsmitteln für die Kunden.

Dieser Prozess stellt in der Schulung neuer Mitarbeiter den größten zeitlichen und inhaltlichen Aspekt dar und bewirkt, dass es bis zu einer vollen Arbeitswoche dauert, bis neue Mitarbeiter selbstständig die Tätigkeit der Kommissionierperson ausführen können. Wesentliche Schwierigkeit hierbei ist es, den richtigen Platz für die Produkte auf dem Transporthilfsmittel zu finden, sodass das Produkt nicht durch andere Produkte beschädigt wird, dass das Produkt nicht andere Produkte beschädigt, dass eine Schlichtung erreicht wird, die in sich stabil ist, und dass die Transporthilfsmittel weder im Lager noch im Transport zum Kunden umfallen, zerfallen oder Waren darauf beschädigt werden.

Zugleich gilt es höchstes Augenmerk darauf zu legen, diese Schlichtung möglichst ohne dazwischenliegende Freiräume am Transporthilfsmittel abzuwickeln, da dadurch einerseits die Beschädigungsgefahr steigt, da die Produkte in Richtung dieser Freiräume verrutschen und andererseits dadurch zusätzliche Transportkosten entstehen. Kann man beispielsweise 10% mehr auf die Transporthilfsmittel laden, bedeutet dies, dass 10% weniger Transporthilfsmittel produziert und 10% weniger Transportkosten generieren werden.

Es ist daher die Aufgabe der Erfindung, ein Verfahren zum manuellen Kommissionieren und einen hierfür geeigneten Kommissionierarbeitsplatz bereitzustellen, mittels welchem die Packdichte erhöht werden kann, ohne dabei auf die Intuition der Kommissionierpersonen zurückgreifen zu müssen.

Dieses Ziel wird mit einem Verfahren zum manuellen Kommissionieren von zumindest zwei Produkten erzielt, welches die folgenden Schritte umfasst:
- Hinterlegen von Schlichtungsparametern zugehörig zu Produktkennzeichnungen der zumindest zwei Produkte in einer Datenbank, wobei die Schlichtungsparameter zumindest eine Größe des Produkts umfassen;
- Empfangen eines Auftrags, welcher Produktkennzeichnungen von zumindest zwei bestellten Produkten umfasst;
- Bereitstellen eines Transporthilfsmittels zur Aufnahme der bestellten Produkte;
- Abrufen der Schlichtungsparameter der bestellten Produkte aus der Datenbank anhand der zugehörigen Produktkennzeichnungen;
- Berechnen einer Packordnung anhand der abgerufenen Schlichtungsparameter, wobei bevorzugt zumindest als untergeordnetes Kriterium die Packdichte der Produkte auf dem Transporthilfsmittel maximiert wird;
- Erzeugen einer Ansicht der berechneten Packordnung und Anzeigen der Ansicht als Packbild; und
- manuelles Verbringen der Produkte in die auf dem Packbild angezeigte Packordnung auf das Transporthilfsmittel.

Mit dem erfindungsgemäßen Verfahren wird erzielt, dass der richtige Platz des jeweiligen Produkts am Transporthilfsmittel im Zuge der manuellen Kommissionierung automatisch und frühzeitig ermittelt werden kann. Dies erspart der Kommissionierperson ein Trial-and-Error Verfahren, um ein optimales Schlichten der Produkte am Transporthilfsmittel zu erzielen. Selbst ungeschultes Personal kann hierbei in kürzester Zeit eingeschult werden, um die Produkte zuverlässig mit einer optimalen Packdichte am Transporthilfsmittel aufzulegen.

Die erfindungsgemäßen Vorteile werden erzielt, indem beispielsweise die grundlegenden Parameter Länge, Breite, Höhe und Gewicht der Produkte vorab in einer Datenbank hinterlegt werden. Dadurch wird erreicht, dass für jedes Produkt eines Auftrags Abmessungen und weitere Schlichtparameter bekannt sind, sodass eine optimale Packordnung bestimmt werden kann und in der Folge ein Packbild erzeugt werden kann. Die Kommissionierpersonen können daraufhin das Packbild als Vorlage benutzen, um die bestellten Produkte auf das Transporthilfsmittel zu schlichten, wodurch die vorberechnete Packordnung der bestellten Produkte erzielt werden kann.

Wird das erfindungsgemäße Verfahren eingesetzt, können auch Kommissionierpersonen ohne langwierige Einschulungszeiten eingesetzt werden, da das Packbild bereits automatisch ermittelt wurde und die Kommissionierperson nicht auf Erfahrungswerte beim Verbringen der Produkte auf das Transporthilfsmittel zurückgreifen muss. Selbst erfahrene Kommissionierpersonen profitieren jedoch von dem erfindungsgemäßen Verfahren, da auch diese nicht immer eine optimale Packdichte erzielen können bzw. nicht für jedes Produkt wissen, ob dieses beispielsweise gekippt oder belastet werden kann.

Bevorzugt wird bei dem Schritt des Berechnens der Packordnung als übergeordnetes Kriterium die Packdichte der Produkte auf dem Transporthilfsmittel maximiert, gegebenenfalls unter Berücksichtigung von weiteren Schlichtungsparametern. Dadurch kann die Anzahl der Produkte auf dem Transporthilfsmittel maximiert werden, wodurch insgesamt ein möglichst effizienter Transport der Produkte stattfinden kann.

Bei der vorgenannten Ausführungsform ist jedoch zu beachten, dass die Wege der Kommissionierperson, um die Produkte aus verschiedenen Orten aus dem Lager zu holen und diese zum Transporthilfsmittel zu bringen, sehr lange sein können. Beispielsweise könnten bei einer maximalen Produktdichte zuerst Produkte aus verschiedenen Lagerpositionen zum Transporthilfsmittel geholt werden und anschließend, beispielsweise für eine zweite Ebene von Produkten auf dem Transporthilfsmittel, abermals Produkte aus verschiedenen Lagerpositionen. In einer alternativen Ausführungsform ist der Kommissionierarbeitsplatz der Kommissionierperson ein Kommissionierfahrzeug mit zumindest einem Stellpltz für ein Transporthilfsmittel. In dieser Ausführungsform wird das Kommissionierfahrzeug zur Lagerposition des jeweiligen Produkts bewegt und die Kommissionierperson kann das Produkt vom Kommissionierfahrzeug aus bzw. durch Absteigen vom Kommissionierarbeitsplatz und Griff ins Regal auf den Lagerplatz in das Transporthilfsmittel legen.

In einer bevorzugten Ausführungsform kann daher vorgesehen werden, dass in der Datenbank ferner Lagerpositionen der Produkte hinterlegt sind und bei dem Schritt des Berechnens der Packordnung ein Weg der Produkte von den Lagerpositionen zum Transporthilfsmittel oder ein Weg des Kommissionierfahrzeugs mit dem Transporthilfsmittel zu den Lagerpositionen der Produkte minimiert wird und bevorzugt als untergeordnetes Kriterium die Packdichte der Produkte auf dem Transporthilfsmittel maximiert wird, gegebenenfalls unter Berücksichtigung von weiteren Schlichtungsparametern. Dadurch kann der Weg der Kommissionierperson bzw. des Kommissionierfahrzeugs zum Verbringen der Produkte vom Lager zum Transporthilfsmittel verkürzt werden, wodurch sich insgesamt die Zeit verkürzt, welche die Kommissionierperson braucht, um die bestellten Produkte auf das Transporthilfsmittel zu schlichten. Beispielweise können auf eine erste Produktebene auf dem Transporthilfsmittel nur Produkte gelegt werden, die in einem gemeinsamen Bereich des Lagers gelagert sind. Danach können auf eine zweite Produktebene auf dem Transporthilfsmittel nur Produkte gelegt werden, die in einem anderen, aber wiederum gemeinsamen Bereich des Lagers gelagert sind. In diesem Beispiel kann wiederum innerhalb jeder der Produktebenen die Packdichte maximiert werden.

In einer weiteren bevorzugten Ausführungsform kann wiederum ein Packbild erzeugt werden, mittels welchem die Zeit reduziert werden kann, die der Auftraggeber braucht, um das beladene Transporthilfsmittel abzuräumen. Um dies zu erzielen, können in der Datenbank ferner Entnahmeprioritäten der Produkte hinterlegt sein und bei dem Schritt des Berechnens der Packordnung die Produkte nach ihrer Entnahmepriorität sortiert werden und bevorzugt als untergeordnetes Kriterium die Packdichte der Produkte auf dem Transporthilfsmittel maximiert werden, gegebenenfalls unter Berücksichtigung von weiteren Schlichtungsparametern. Beispielsweise kann das Lager des Auftraggebers anders ausgestaltet sein als das Lager der Kommissionierperson, sodass durch diese Erstellung des Packbilds eine alternative Reduktion hinsichtlich der Arbeitszeit erzielt werden kann, nämlich jener Arbeitszeit, die der Auftraggeber benötigt, um die Produkte in sein eigenes Lager zu verbringen.

Bei den beiden letztgenannten Ausführungsformen kann es jedoch dazu kommen, dass die Packdichte zu gering wird, sodass trotz Arbeitszeitminimierung ein unzureichendes Ergebnis hinsichtlich der Packdichte erzielt wird. Bevorzugt kann daher vorgesehen werden, dass das Kriterium der Maximierung der Packdichte der Produkte auf dem Transporthilfsmittel als übergeordnetes Kriterium gewählt wird, wenn die Packdichte durch eine andere Berechnung einen Schwellwert unterschreiten würde.

Zusätzlich zu den oben genannten Ausführungsformen, bei denen die Packdichte bzw. eine Reduktion der Arbeitszeit erzielt werden soll, kann mitberücksichtigt werden, dass manche der Produkte nicht bzw. nur bedingt stabelbar sind. Dazu können die Schlichtungsparameter eine maximale Gewichtsbelastung und bevorzugt ein Gewicht umfassen und bei dem Schritt des Berechnens der Packordnung nur dann ein erstes Produkt auf einem zweiten Produkt platziert werden, wenn das erste Produkt ein Gewicht aufweist, das geringer ist als die maximale Gewichtsbelastung des zweiten Produkts.

Zusätzlich können die Schlichtungsparameter eine Eignung zum Verkippen anzeigen. Manche der Produkte sollen nicht gekippt oder nicht umgedreht werden, sodass auch diese Eigenschaft bei der Bestimmung der Packordnung mitberücksichtigt werden kann.

Besonders bevorzugt umfasst das Packbild eine Darstellung der Reihenfolge, in welcher die bestellten Produkte auf das Transporthilfsmittel verbracht werden sollen. Dies hilft der Kommissionierperson dabei, die Produkte gemäß dem Packbild auf dem Transporthilfsmittel zu positionieren. Insgesamt kann durch diese Maßnahme ein weiterer Zeitgewinn beim manuellen Kommissionieren erzielt werden.

Da üblicherweise eine Vielzahl von Produkten auf das Transporthilfsmittel gelegt wird, kann die Kommissionierperson aus einer einfachen Draufsicht nicht immer erkennen, wie die Produkte in unteren Ebenen anzuordnen sind. Es ist daher bevorzugt, wenn das Packbild mehrere Ebenen von Produkten darstellt, beispielsweise als Sequenz von Packebenen. Dadurch kann die Kommissionierperson auch bei übereinander angeordneten Produkten zweifelsfrei erkennen, wie Produkte in unteren Ebenen angeordnet werden sollen.

In einer besonders bevorzugten Ausführungsform sind die Produkte auf dem Packbild als Symbolbilder oder fotographische Aufnahmen dargestellt. Diese bevorzugten Darstellungen der Produkte können der Kommissionierperson dabei helfen, das Produkt im Packbild wiederzuerkennen.

Bei dem genannten Verfahren zum manuellen Kommissionieren kann das Transporthilfsmittel ein Rollbehälter, eine Palette, eine Halbpalette, ein Dolly oder eine Kiste sein. Diese Transporthilfsmittel eigenen sich besonders dazu, um darauf die Anordnung von Produkten vorausberechnen und als Packbild darzustellen.

Besonders bevorzugt umfasst der Schritt des Bereitstellens des Transporthilfsmittels zur Aufnahme der bestellten Produkte den Schritt des Bestimmens eines geeigneten Transporthilfsmittels anhand der im Auftrag empfangenen Produktkennzeichnungen. Je nach Anzahl und Art der Produkte kann die Wahl eines anderen Transporthilfsmittels günstiger sein. Da beim Vorausberechnen der Packordnung bereits alle Produkte und somit auch die insgesamt benötigte Fläche bzw. der insgesamt benötigte Raum am Transporthilfsmittel bekannt ist, kann auch dieses vorausberechnet werden. Alternativ könnte ein gewünschtes Transporthilfsmittel und bevorzugt auch dessen Größe im Auftrag angegeben werden.

Bei dem erfindungsgemäßen Verfahren ist überdies bevorzugt, wenn das Packbild auf einem Bildschirm angezeigt wird, welcher bevorzugt auf einem Smartphone, einem Tablet oder einem Monitor ausgebildet ist. Dies erlaubt der Kommissionierperson, das Packbild in besonders guter Qualität zu betrachten.

In einem weiteren Aspekt betrifft die Erfindung einen Kommissionierarbeitsplatz zum manuellen Kommissionieren von zumindest zwei Produkten gemäß dem oben genannten Verfahren, umfassend einen Stellplatz für ein Transporthilfsmittel und einen Bildschirm zur Anzeige des Packbilds. Dieser Kommissionierarbeitsplatz ermöglicht die Durchführung des oben genannten Verfahrens, sodass die genannten Vorteile auch auf den Kommissionierarbeitsplatz zutreffen.

Der Kommissionierarbeitsplatz kann ein "rollender" Arbeitsplatz für die Kommissionierperson sein, der als ein fahrbares Kommissioniergerät konfiguriert ist, an dem der Bildschirm oder ein mobiler Computer, PDA oder Tablet und zumindest ein Stellplatz für ein Transporthilfsmittel, vorzugsweise Stellplätze für mehrere Transporthilfsmittel, vorgesehen sind.

Bevorzugt sind bei diesem Kommissionierarbeitsplatz der Bildschirm und der Stellplatz derart zueinander angeordnet, dass sowohl der Bildschirm als auch ein am Stellplatz befindliches Transporthilfsmittel von einer Arbeitsposition einer Kommissionierperson einsehbar sind. Die Kommissionierperson sieht somit von seiner Arbeitsposition sowohl das Packbild als auch das Transporthilfsmittel und die sich bereits darauf befindlichen Produkte, sodass die Kommissionierperson schnell erkennt, wo das nächste Produkt angeordnet werden soll. Dieses Kommissionierverfahren kann somit schneller durchgeführt werden als in Ausführungsformen, in denen der Bildschirm außerhalb des Sichtfelds der Kommissionierperson angeordnet ist.

Weiters bevorzugt umfasst der genannte Kommissionierarbeitsplatz eine Recheneinheit, die dazu ausgebildet ist, die Schritte des Empfangens, Abrufens, Berechnens und Erzeugens durchzuführen, wobei bevorzugt auch die Datenbank in der Recheneinheit vorgesehen ist. Dadurch können alle rechenintensiven Schritte am Kommissionierarbeitsplatz durchgeführt werden. Alternativ können diese Schritte jedoch auch in einem Server durchgeführt werden, sodass das Packbild nur mehr an den Kommissionierarbeitsplatz übertragen wird.

Vorteilhafte und nicht einschränkende Ausführungsformen der Erfindung werden nachfolgend anhand der Zeichnungen näher erläutert.
Figur 1 zeigt die beim erfindungsgemäßen Verfahren zum Einsatz kommenden Komponenten in einer schematischen Ansicht.

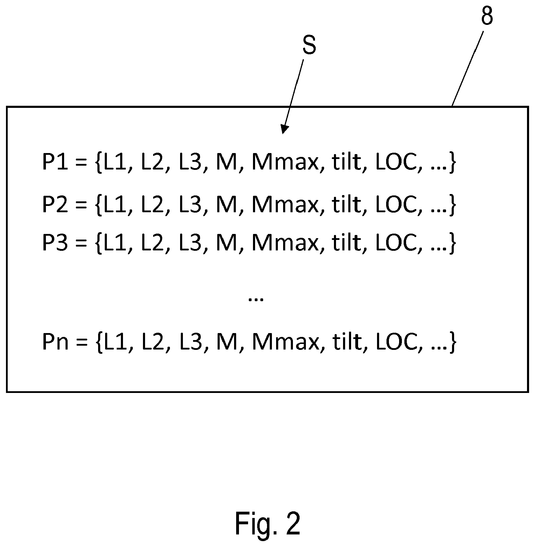

Figur 2 zeigt schematisch einen Datenbankeintrag von Schlichtungsparametern.

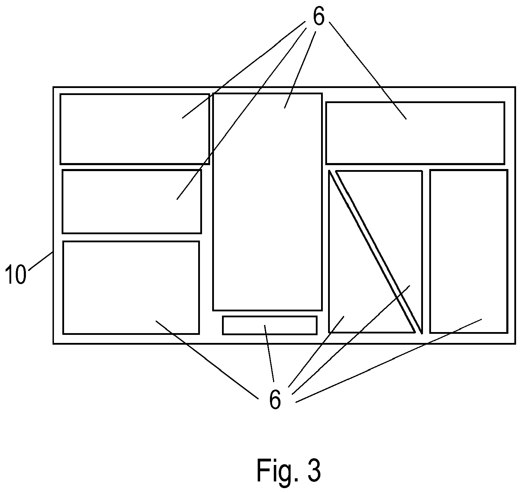

Figur 3 zeigt ein Packbild des erfindungsgemäßen Verfahrens.

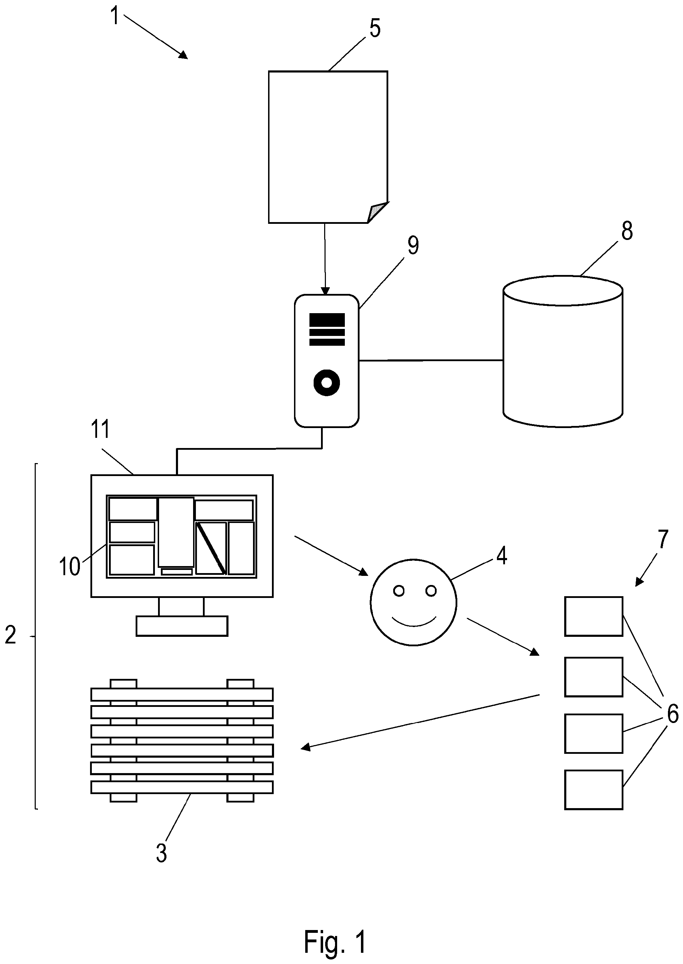

Figur 1 zeigt ein Kommissioniersystem 1, umfassend einen Kommissionierarbeitsplatz 2, an dem ein Transporthilfsmittel 3 angeordnet ist. An diesem Kommissionierarbeitsplatz 2 soll eine Kommissionierperson 4 gemäß einem Auftrag 5 bestellte Produkte 6 aus einem Lager 7 holen und auf das Transporthilfsmittel 3 schlichten.

Die Produkte 6 können Handelswaren aller Art sein, von Artikeln des täglichen Bedarfs bis hin zu Industriewaren. Das Transporthilfsmittel 3 wird derart gewählt, dass auf diesem zumindest zwei Produkte 6 angeordnet werden können. Üblicherweise wird als Transporthilfsmittel 3 ein Rollbehälter, eine Palette, eine Halbpalette, ein Dolly oder eine Kiste gewählt.

Gemäß dem Stand der Technik wird der Kommissionierperson 4 der Auftrag 5 überreicht, sodass diese die Produkte 6 aus dem Lager 7 holt und auf das Transporthilfsmittel 3 schlichtet. Die Kommissionierperson 4 führt das Schlichten nach Erfahrungswerten durch und versucht dabei, die Produkte 6 möglichst stauraumeffizient zu schlichten. Zu Zeiten, in denen nicht genügend Kommissionierpersonen 4 für eine Vielzahl an Aufträgen 5 bereitstehen, müssen neue Kommissionierpersonen 4 eingeschult werden, was in der Regel einige Tage oder sogar Wochen dauert. Es können daher oft nicht schnell genug neue Kommissionierpersonen 4 eingesetzt werden, um die Vielzahl an Aufträgen 5 zu erledigen.

Bei dem Kommissioniersystem 1 von Figur 1 wird zur Behebung dieses Problems eine Datenbank 8 eingesetzt, in der für jedes Produkt 6 eine zugehörige Produktkennzeichnung Pn, n = 1, 2, 3, ..., hinterlegt ist. Beispielsweise ist jedem unterschiedlichen Produkt 6 im Lager 7 eine Produktkennzeichnung Pn zugewiesen, wobei gleiche Produkte 6 eine gleiche Produktkennzeichnung Pn aufweisen. Sind beispielsweise zehn Stifte derselben Sorte im Lager 7 vorhanden, wird diesen dieselbe Produktkennzeichnung Pn zugeordnet. Es ist aber nicht notwendig, wenngleich möglich, dass in der Datenbank 8 Inventar über die Anzahl der Produkte 6 im Lager 7 geführt wird.

Zu jeder Produktkennzeichnung Pn ist in der Datenbank 8 ein Schlichtungsparameter S hinterlegt, wobei die Schlichtungsparameter S zumindest eine Größe des Produkts 6 umfassen. Die Größe kann beispielsweise durch Länge L1, Breite L2 und Höhe L3 angegeben werden. Auch andere Angaben können für die Größe hinterlegt werden, beispielsweise wenn das Produkt 6 eine andere Form als eine Quaderform aufweist. Beispielsweise können Durchmesser für kugelförmige Produkte 6 wie Bälle oder Zylinderdurchmesser und Zylinderhöhen für Produkte 6 wie Rohre verwendet werden.

Weiters können die Schlichtungsparameter S ein Gewicht M des Produkts 6 und/oder eine maximale Belastbarkeit Mmax umfassen. Wird für ein Produkt 6 kein Gewicht in den Schlichtungsparametern S angegeben, kann beispielsweise ein Maximalwert angenommen werden. Auch kann mit einem Parameter tilt angegeben werden, ob und/oder wie weit das Produkt 6 gekippt werden kann. Bevorzugt wird dieser Parameter tilt als Winkelangabe angegeben. Auch kann ein Ort LOC als Schlichtungsparameter hinterlegt werden, an dem das jeweilige Produkt 6 im Lager 7 angeordnet ist, oder eine Entnahmepriorität, deren Zweck unten im Detail erläutert wird.

Bei dem erfindungsgemäßen Verfahren wird der Auftrag 5 im Kommissioniersystem 5 empfangen, beispielsweise elektronisch, damit dieser automatisch weiterverarbeitet werden kann. Je nach Ausführungsform kann der Auftrag 5 über das Internet empfangen werden oder beispielsweise unmittelbar über eine Schnittstelle am Kommissionierarbeitsplatz 2, z.B. wenn dieser unmittelbar in einem Kaufhaus angeordnet ist.

Der Auftrag 5 enthält die Produktkennzeichnungen Pn der bestellten Produkte und deren Anzahl, sofern mehr als ein Produkt mit derselben Produktkennung Pn bestellt wird. Im Auftrag 5 kann überdies ein gewünschtes Transporthilfsmittel 3 und/oder dessen Größe angegeben werden.

Die Datenbank 8 kann beispielsweise am Kommissionierarbeitsplatz 2 selbst angeordnet sein, in welchem Fall der Auftrag 5 unmittelbar an den Kommissionierarbeitsplatz 2 gesandt wird. Alternativ dazu kann die Datenbank 8 in einem Server oder in einem Computer des Auftraggebers selbst angeordnet sein. In diesem Fall müssen die Produktkennzeichnungen Pn nicht unmittelbar an den Kommissionierarbeitsplatz 2 gesandt werden, sondern es können bereits die entsprechenden Schlichtungsparameter S anstatt der Produktkennzeichnungen Pn an den Kommissionierarbeitsplatz 2 gesandet werden.

Unabhängig davon, an welchem Ort sich die Datenbank 8 befindet, findet der Schritt des Abrufens der Schlichtungsparameter S der bestellten Produkte aus der Datenbank 8 anhand der im Auftrag 5 spezifizierten Produktkennzeichnungen Pn statt. Es kommt daher zu einer Datenbankabfrage, um die Schlichtungsparameter S für die bestellten Produkte 6 zu bestimmen.

Mittels der Schlichtungsparameter S kann in der Folge eine optimale Packordnung bestimmt werden. Dies kann in einer Recheneinheit 9 vorgenommen werden, die sich beispielsweise am Kommissionierarbeitsplatz 2, im genannten Server oder an einem Standpunkt des Auftraggebers befindet. Beispielsweise kann die genannte Datenbank 8 als Speichereinheit der Recheneinheit 9 ausgebildet sein. Alternativ dazu können Datenbank 8 und Recheneinheit 9 auch als getrennte Einheiten vorgesehen werden. Die Datenbank 8 selbst könnte als distribuierte Datenbank ausgestaltet sein, sodass es sich nicht um einen zusammengefassten Datensatz handeln muss.

Bevorzugt wird bei der Bestimmung der Packordnung zumindest als untergeordnetes Kriterium die Packdichte der Produkte 6 auf dem Transporthilfsmittel 3 maximiert, gegebenenfalls unter Berücksichtigung von weiteren Schlichtungsparametern S. Dies bedeutet, dass zumindest einige der Produkte 6 auf dem Transporthilfsmittel 3 so aneinandergereiht werden können, dass in diesem Bereich auf dem Transporthilfsmittel 3 die Packdichte maximal wird. Die Bedingung "unter Berücksichtigung von weiteren Schlichtungsparametern S" bedeutet, dass beispielsweise berücksichtigt wird, dass auf ein Produkt 6 kein oder kein zu schweres Produkt 6 gestapelt wird oder dass bestimmte Produkte nicht gekippt werden, wenn dies derart in den Schlichtungsparametern S angegeben ist. Es wird daher die Packdichte unter Berücksichtigung dieser Bedingungen maximiert.

Das Berechnen der Packordnung kann anhand unterschiedlicher Optimierungsziele erfolgen. Als erstes Optimierungsziel kann gewählt werden, dass die globale, d.h. insgesamte, Packdichte der Produkte 6 auf dem Transporthilfsmittel 3 maximiert wird, gegebenenfalls unter Berücksichtigung von weiteren Schlichtungsparametern S. Das Maximieren der insgesamten Packdichte ist somit das übergeordnete Kriterium, wobei weiterhin die weiteren Schlichtungsparameter S mitberücksichtigt werden können, um z.B. ein Stapeln von nicht stapelbaren Produkten 6 zu verhindern. Der Ausdruck "übergeordnet" bedeutet, dass die Maximierung der Packdichte Vorrang vor anderen Kriterien wie z.B. den unten beschriebenen Wegreduktionen hat. Werden andere Kriterien nicht vorgesehen, kann das übergeordnete Kriterium auch das einzige Kriterium, neben der möglichen Berücksichtigung der Schlichtungsparameter, sein.

Wird mehr als ein Transporthilfsmittel 3 für die bestellten Produkte 6 benötigt, kann entweder die Packdichte auf jedem der Transporthilfsmittel 3 einzeln betrachtet maximiert werden oder bevorzugt die Packdichte für die Gesamtheit der Transporthilfsmittel 3.

Die Wahl des Algorithmus, der die Packordnung mit maximaler Packdichte ermittelt, kann durch den Fachmann getroffen werden. Beispielsweise kann ein Monte-Carlo-Algorithmus zum Einsatz kommen oder auch ein Algorithmus, der die Packordnung analytisch bestimmt, was insbesondere dann vorteilhaft sein kann, wenn alle Produkte quaderförmig sind.

Als zweites, zum ersten alternatives Optimierungsziel kann gewählt werden, dass beispielsweise anhand des Parameters LOC ein Weg der Produkte 6 von den Lagerpositionen zum Transporthilfsmittel 3 minimiert wird, was somit das übergeordnete Kriterium darstellt, und bevorzugt als untergeordnetes Kriterium die Packdichte der Produkte 6 auf dem Transporthilfsmittel 3 maximiert wird, gegebenenfalls unter Berücksichtigung von weiteren Schlichtungsparametern S.

Dieses zweite Optimierungsziel kann beispielsweise erzielt werden, indem zuerst alle Produkte 6 gruppiert werden, die in derselben Umgebung im Lager 6 angeordnet sind, beispielsweise in derselben Regalreihe. Dies kann beispielsweise durchgeführt werden, indem Produkte 6 mit gleichen oder ähnlichen Parametern LOC gruppiert werden. Produkte 6 einer ersten Gruppierung können eingangs mit einer maximalen Packdichte auf eine erste Ebene bzw. auf ersten Ebenen angeordnet werden. Daraufhin können Produkte 6 einer zweiten Gruppierung mit einer maximalen Packdichte auf den Produkten 6 der ersten Gruppierung angeordnet werden. Welche der Gruppierungen von Produkten 6 als erste Gruppierung angesehen wird, kann entweder willkürlich gewählt werden, oder dies kann in einer globalen Maximierungsaufgabe der Packdichte bzw. globalen Minimierungsaufgabe des Wegs mitberücksichtigt werden.

In der Praxis führt dies dazu, dass die Kommissionierperson 4 zuerst alle Produkte 6 aus derselben Lagerposition zusammenträgt und folglich auf dem Transporthilfsmittel 3 auflegen kann. Danach können alle Produkte 6 aus einer anderen Lagerposition zusammengetragen und auf den bereits auf dem Transporthilfsmittel 3 befindlichen Produkten 6 aufgelegt werden. Es wird daher eine Reduktion der Zeit erzielt, die die Kommissionierperson 4 benötigt, um alle bestellten Produkte 6 auf das Transporthilfsmittel 3 zu schlichten.

Als drittes Optimierungsziel kann gewählt werden, dass, wenn in der Datenbank 8 Entnahmeprioritäten der Produkte 6 hinterlegt sind, bei dem Schritt des Berechnens der Packordnung die Produkte 6 nach ihrer Entnahmepriorität sortiert werden, was somit das übergeordnete Kriterium darstellt, und bevorzugt als untergeordnetes Kriterium die Packdichte der Produkte 6 auf dem Transporthilfsmittel 3 maximiert wird, gegebenenfalls unter Berücksichtigung von weiteren Schlichtungsparametern S.

Gruppierungen können wie bei dem zweiten Optimierungsziel vorgenommen werden, wobei sich die Gruppierungen nach den Entnahmeprioritäten des Auftraggebers richten. Hierdurch kann beispielsweise der Auftraggeber eine Zeitersparnis erzielen, wenn dieser selbst ein Lager mit unterschiedlichen Lagerreihen hat. In diesem Fall würde die Entnahmepriorität beispielsweise eine Lagerreihe anzeigen.

Beim zweiten und beim dritten Optimierungsziel kann es trotz der Packdichtemaximierung innerhalb der Gruppierungen dazu kommen, dass die globale, d.h. insgesamte, Packdichte zu gering wird und unter einen Schwellwert fällt. In derartigen Fällen kann vorgesehen werden, dass das Kriterium der Minimierung des Wegs als übergeordnetes Optimierungsziel zumindest teilweise oder aber auch global aufgegeben wird und die Maximierung der Packdichte der Produkte 6 auf dem Transporthilfsmittel 3 als übergeordnetes Kriterium gewählt wird. Der genannte Schwellwert kann als Absolutbetrag angegeben werden oder als Relativbetrag zur Packdichte, die mit dem ersten Optimierungsziel erreicht werden könnte.

Es ist zu beachten, dass die Ausführungsform mit Gruppierungen nur eine mögliche Ausführungsform ist. Insbesondere können die Optimierungsziele global vorgenommen werden, sodass Gruppierungen nicht immer zweckmäßig sind. Insbesondere wenn das Optimierungsproblem mit Monte-Carlo-Algorithmus gelöst wird, kann auf eine explizite Gruppierung verzichtet werden und die Bedingung der Wegminimierung bzw. Sortierung nach der Entnahmepriorität als Randbedingung aufgestellt werden.

Sobald eine Packordnung gefunden wurde, die den Vorgaben des gewünschten Optimierungsziels entspricht, kann eine Ansicht der Packordnung erzeugt werden, z.B. durch Rendering. Die Ansicht kann in der Folge als Packbild 10 auf einem Bildschirm 11 dargestellt werden, der beispielsweise auf einem Smartphone, einem Tablet oder einem Monitor ausgebildet ist. Die Kommissionierperson 4 kann dieses Packbild 10 auf dem Bildschirm 11 ansehen und die Produkte 6 wie auf dem Packbild 10 dargestellt manuell auf dem Transporthilfsmittel 3 anordnen und so die errechnete Packordnung umsetzen.

Beim Erzeugen der Ansicht können die Produkte 6 als Symbolbilder oder fotographische Aufnahmen dargestellt sein. Das Packbild 10 kann daher entweder fotorealistisch oder symbolisch sein. Das Packbild 10 kann beispielsweise eine Draufsicht, Seitenansicht oder Perspektivansicht der Packordnung sein. Auch könnte das Packbild 10 mehrere Ansichten der Packordnung umfassen.

Da überdies in der Regel mehrere Produkte 6 übereinanderliegen, kann vorgesehen werden, dass das Packbild 10 mehrere, unterschiedliche Ebenen der Packordnung darstellt, beispielsweise als Sequenz von Bildern. Alternativ oder zusätzlich könnten die Produkte 6 im Packbild 10 transparent dargestellt sein, sodass die Kommissionierperson 4 auf einen Blick alle Produkte 6 erkennt.

Um der Kommissionierperson 4 das Auflegen der Produkte 6 auf das Transporthilfsmittel 3 weiter zu erleichtern, können die Produkte 6 am Packbild 10 nummeriert sein oder das Packbild 10 könnte eine Sequenz von Bildern sein, wobei bei jedem Bild der Sequenz ein weiteres Produkt 6 hinzutritt, um schlussendlich die gesamte Packordnung anzuzeigen.

Der Kommissionierarbeitsplatz 2 ist beispielsweise derart angeordnet, dass sowohl der Bildschirm 11 als auch das Transporthilfsmittel 3 von einer Arbeitsposition der Kommissionierperson 4 einsehbar sind, wodurch die Kommissionierperson 4 sowohl Packbild 10 als auch die im Aufbau befindliche Packordnung der bestellten Produkte 6 auf dem Transporthilfsmittel 3 im Sichtfeld hat.

Zudem sei an dieser Stelle angemerkt, dass im oben beschriebenen Verfahren entweder nur eine Art von Transporthilfsmittel 3 zum Einsatz kommen kann, dessen Größen bekannt sind und bevorzugt auch Einfluss in die Berechnung der Packordnung finden. Auch könnten mehrere verschiedene Transporthilfsmittel 3 zum Einsatz kommen, deren Größen beispielsweise in der Datenbank 8 hinterlegt sind, beispielsweise um das bestgeeignetste Transporthilfsmittel 3 zu bestimmen. Bei dem Berechnen der gewünschten Packordnung kann auch das bestgeeignetste Transporthilfsmittel 3 miterrechnet werden bzw. es kann ermittelt werden, ob für die bestellten Produkte 6 mehrere Transporthilfsmittel 3 benötigt werden. Alternativ oder zusätzlich könnte ein gewünschtes Transporthilfsmittel 3 und optional auch dessen Größen im Auftrag 5 angegeben werden.

In den oben erläuterten Ausführungsformen wurde überwiegend auf ein starres Lager Bezug genommen, bei dem die Kommissionierperson 4 die Produkte 6 jeweils aus dem Lager 7 holt. Jedoch könnten auch Förderbänder zum Einsatz kommen, die die Produkte 6 zur Kommissionierperson 4 liefern, die diese manuell gemäß dem angezeigten Packbild 10 auf das Transporthilfsmittel 3 verbringt. In einer weiteren Ausführungsform der Erfindung ist der Kommissionierarbeitsplatz als ein "rollender" Arbeitsplatz in Form eines fahrbaren Kommissioniergeräts ausgebildet. D. h. die Kommissionierperson fährt auf dem Kommissioniergerät durch das Lager, auf dem sich die Transporthilfsmittel (Rollbehälter, Paletten), die schon für die Kunden bestimmt sind, befinden. Bei dieser Ausführungsform ist der Kommissionierprozess nicht zweistufig, sondern einstufig - d.h. nicht zuerst Artikel aus dem Lager holen und dann im Transporthilfsmittel schlichten, sondern in einem Durchlauf das Kommissioniergerät zum Artikel fahren und den Artikel gleich auf das richtige Transporthilfsmittel verbringen. Dabei kann die Kommissionierperson mehrere Transporthilfsmittel am Kommissioniergerät mitführen, die entweder alle für einen Kunden oder jeder für einen anderen Kunden bestimmt sind, um die Wege durch das Lager zu minimieren.

## Patentansprüche

1. Verfahren zum manuellen Kommissionieren von zumindest zwei Produkten (6), umfassend die Schritte:
- Hinterlegen von Schlichtungsparametern (S) zugehörig zu Produktkennzeichnungen (Pn) der zumindest zwei Produkte (6) in einer Datenbank (8), wobei die Schlichtungsparameter (S) zumindest eine Größe des Produkts (6) umfassen;
- Empfangen eines Auftrags (5), welcher Produktkennzeichnungen (Pn) von zumindest zwei bestellten Produkten (6) umfasst;
- Bereitstellen zumindest eines Transporthilfsmittels (3) zur Aufnahme der bestellten Produkte (6);
- Abrufen der Schlichtungsparameter (S) der bestellten Produkte (6) aus der Datenbank (8) anhand der im Auftrag (5) spezifizierten Produktkennzeichnungen (Pn);
- Berechnen einer Packordnung anhand der abgerufenen Schlichtungsparameter (S), wobei bevorzugt zumindest als untergeordnetes Kriterium die Packdichte der Produkte (6) auf dem Transporthilfsmittel (3) maximiert wird;
- Erzeugen einer Ansicht der berechneten Packordnung und Anzeigen der Ansicht als Packbild (10); und
- manuelles Verbringen der Produkte (6) in die auf dem Packbild (10) angezeigte Packordnung auf das Transporthilfsmittel (3).

2. Verfahren nach Anspruch 1, wobei bei dem Schritt des Berechnens der Packordnung als übergeordnetes Kriterium die Packdichte der Produkte (6) auf dem Transporthilfsmittel (3) maximiert wird, gegebenenfalls unter Berücksichtigung von weiteren Schlichtungsparametern (S).

3. Verfahren nach Anspruch 1, wobei in der Datenbank (8) ferner Lagerpositionen der Produkte (6) hinterlegt sind und bei dem Schritt des Berechnens der Packordnung ein Weg der Produkte (6) von den Lagerpositionen zum Transporthilfsmittel (3) oder ein Weg des Transporthilfsmittels (3) zu den Lagerpositionen der Produkte (6) minimiert wird und bevorzugt als untergeordnetes Kriterium die Packdichte der Produkte (6) auf dem Transporthilfsmittel (3) maximiert wird, gegebenenfalls unter Berücksichtigung von weiteren Schlichtungsparametern (S).

4. Verfahren nach Anspruch 1, wobei in der Datenbank (8) ferner Entnahmeprioritäten der Produkte (6) hinterlegt sind und bei dem Schritt des Berechnens der Packordnung die Produkte (6) nach ihrer Entnahmepriorität sortiert werden und bevorzugt als untergeordnetes Kriterium die Packdichte der Produkte (6) auf dem Transporthilfsmittel (3) maximiert wird, gegebenenfalls unter Berücksichtigung von weiteren Schlichtungsparametern (S).

5. Verfahren nach Anspruch 3 oder 4, wobei das Kriterium der Maximierung der Packdichte der Produkte (6) auf dem Transporthilfsmittel (3) als übergeordnetes Kriterium gewählt wird, wenn die Packdichte durch eine andere Berechnung einen Schwellwert unterschreiten würde.

6. Verfahren nach einem der Ansprüche 1 bis 5, wobei die Schlichtungsparameter (S) eine maximale Gewichtsbelastung und bevorzugt ein Gewicht umfassen und bei dem Schritt des Berechnens der Packordnung nur dann ein erstes Produkt (6) auf einem zweiten Produkt (6) platziert wird, wenn das erste Produkt (6) ein Gewicht aufweist, das geringer ist als die maximale Gewichtsbelastung des zweiten Produkts (6).

7. Verfahren nach einem der Ansprüche 1 bis 6, wobei das Packbild (10) eine Darstellung der Reihenfolge umfasst, in welcher die bestellten Produkte (6) auf das Transporthilfsmittel (3) verbracht werden sollen.

8. Verfahren nach einem der Ansprüche 1 bis 7, wobei das Packbild (10) mehrere Ebenen von Produkten (6) darstellt, bevorzugt als Sequenz von Packebenen.

9. Verfahren nach einem der Ansprüche 1 bis 8, wobei die Produkte (6) auf dem Packbild (10) als Symbolbilder oder fotographische Aufnahmen dargestellt sind.

10. Verfahren nach einem der Ansprüche 1 bis 9, wobei das Transporthilfsmittel (3) ein Rollbehälter, eine Palette, eine Halbpalette, ein Dolly oder eine Kiste ist.

11. Verfahren nach einem der Ansprüche 1 bis 10, wobei der Schritt des Bereitstellens des Transporthilfsmittels (3) zur Aufnahme der bestellten Produkte (6) den Schritt des Bestimmens eines geeigneten Transporthilfsmittels (3) anhand der im Auftrag empfangenen Produktkennzeichnungen (Pn) umfasst.

12. Verfahren nach einem der Ansprüche 1 bis 11, wobei das Packbild (10) auf einem Bildschirm (11) angezeigt wird, welcher bevorzugt auf einem Smartphone, einem Tablet oder einem Monitor ausgebildet ist.

13. Kommissionierarbeitsplatz (2) zum manuellen Kommissionieren von zumindest zwei Produkten (6) nach einem Verfahren der Ansprüche 1 bis 12, umfassend einen Stellplatz für ein Transporthilfsmittel (3) und einen Bildschirm (11) zur Anzeige des Packbilds (10).

14. Kommissionierarbeitsplatz (2) nach Anspruch 13, wobei der Bildschirm (11) und der Stellplatz derart zueinander angeordnet sind, dass sowohl der Bildschirm (11) als auch ein am Stellplatz befindliches Transporthilfsmittel (3) von einer Arbeitsposition einer Kommissionierperson (4) einsehbar sind.

15. Kommissionierarbeitsplatz (2) nach Anspruch 13 oder 14, umfassend eine Recheneinheit (9), die die dazu ausgebildet ist, die Schritte des Empfangens, Abrufens, Berechnens und Erzeugens durchzuführen, wobei bevorzugt auch die Datenbank (8) in der Recheneinheit (9) vorgesehen ist.

16. Kommissionierarbeitsplatz (2) nach einem der Ansprüche 13 bis 15, **dadurch gekennzeichnet, dass** der Kommissionierarbeitsplatz (2) als ein fahrbarer Kommissionierarbeitsplatz (2), insbesondere ein fahrbares Kommissioniergerät, an dem der Bildschirm (11) und zumindest ein Stellplatz für ein Transporthilfsmittel (3), vorzugsweise Stellplätze für mehrere Transporthilfsmittel (3), vorgesehen sind, ausgebildet ist.
